# EUROPÄISCHE PATENTSCHRIFT

(11) **EP 2 630 460 B1**
(45) Veröffentlichungstag und Bekanntmachung des Hinweises auf die Patenterteilung: **31.10.2018**
(21) Anmeldenummer: 12783868.8
(22) Anmeldetag: 20.09.2012
(51) Int. Cl.: G01L 5/28

(54) **PLATTENBREMSPRÜFSTAND UND EIN VERFAHREN ZUR BREMSENPRÜFUNG BEI FAHRZEUGEN**
PLATE BRAKE TEST STAND AND A METHOD FOR TESTING THE BRAKES IN VEHICLES
BANC D'ESSAI DE FREINS À PLAQUES ET PROCÉDÉ D'ESSAI DE FREINS POUR VÉHICULES

(30) Priorität: 09.11.2011 DE 102011086036
(43) Veröffentlichungstag der Anmeldung: 28.08.2013
(73) Patentinhaber: Micro-Epsilon Messtechnik GmbH & Co. KG, 94496 Ortenburg (DE)
(72) Erfinder: FEMBOECK, Josef, 84524 Neuötting (DE)
(74) Vertreter: Patent- und Rechtsanwälte Ullrich & Naumann
(86) Internationale Anmeldenummer: PCT/DE2012/200064
(87) Internationale Veröffentlichungsnummer: WO 2013/068007

(56) Entgegenhaltungen:
- DE-A1-102007 020 072
- DE-U1-202006 011 164
- US-A- 4 011 751
- US-A- 5 467 645

## Beschreibung

Die Erfindung betrifft einen Plattenbremsprüfstand mit einer Bremskraft-Messeinrichtung und einer Geschwindigkeits-Messeinrichtung, wobei während eines Messvorgangs zur Bremsenprüfung eines Fahrzeugs neben der Bremskraft die Geschwindigkeit des Fahrzeugs für eine vorgebbare Datenauswertung gemessen wird.

Des Weiteren betrifft die vorliegende Erfindung ein Verfahren zur Bremsenprüfung bei Fahrzeugen mittels eines Plattenbremsprüfstands mit einer Bremskraft-Messeinrichtung und einer Geschwindigkeits-Messeinrichtung, wobei während eines Messvorgangs zur Bremsenprüfung eines Fahrzeugs neben der Bremskraft die Geschwindigkeit des Fahrzeugs für eine vorgebbare Datenauswertung gemessen wird.

Plattenbremsprüfstände der eingangs genannten Art sind aus der Praxis bekannt und existieren in unterschiedlichen Ausführungsformen. Bei derartigen Plattenbremsprüfständen fährt zur Bremsenprüfung das zu untersuchende Fahrzeug auf jeweilige Platten auf und bremst dann ab, so dass eine Erfassung der beim Abbremsen realisierten Bremskraft möglich ist.

Gemäß entsprechender neuer Gesetzesvorgaben muss bei einer derartigen Bremsenprüfung neben der Bremskraft die Geschwindigkeit des auffahrenden Fahrzeugs mitgemessen werden. Diese ergänzende Geschwindigkeitsmessung wird heutzutage mittels Kontaktschwellen durchgeführt.

Um die aktuellen gesetzgeberischen Vorgaben zu erfüllen, muss nach einem herkömmlichen Verfahren das Gewicht des Fahrzeugs berücksichtigt werden, da bestimmte Mindestabbremsungen vorgeschrieben sind, die das beladene Fahrzeug auf jeden Fall erreichen muss. Die große Mehrheit der Fahrzeuge wird allerdings nicht im voll beladenen, sondern im leeren oder teilbeladenen Zustand zur Bremsenprüfung vorgestellt. Vor einer Messung muss das Fahrzeug dann zunächst gewogen werden, um zum Nachweis der Erfüllung der gesetzlichen Vorschriften eine Hochrechnung zu ermöglichen, aus der sich dann die im beladenen Zustand des Fahrzeugs zu erwartende Bremskraft ergibt.
Bei den herkömmlichen Plattenbremsprüfständen und Verfahren zur Bremsenprüfung mittels derartiger Plattenbremsprüfstände ist problematisch, dass zur Erfüllung der Gesetzesvorgaben eine aufwändige Hochrechnung unter Berücksichtigung des separat zu ermittelnden Fahrzeuggewichts und/oder eine aufwändige Geschwindigkeitsmessung mittels Kontaktschwellen, deren Installation und Verkabelung zeitintensiver ist, durchgeführt werden muss. Dies bedeutet, dass herkömmliche Plattenbremsprüfstände und Verfahren zur Bremsenprüfung mittels derartiger Plattenbremsprüfstände insgesamt aufwändig und unpraktisch zu handhaben sind. Die Folge aus diesen Nachteilen sind lange Messzeiten und die Gefahr des Auftretens von Messfehlern bei Schwankungen der Umgebungsbedingungen während der langen Messzeiten.

Vorrichtungen zur Bremsenprüfung gemäß der Stand der Technik werden z.B. in DE202006011164, DE102007020072, US4011751 und US5467645 offenbart. Der vorliegenden Erfindung liegt daher die Aufgabe zugrunde, einen Plattenbremsprüfstand und ein Verfahren zur Bremsenprüfung mittels eines Plattenbremsprüfstands derart auszugestalten und weiterzubilden, dass eine einfache und sichere Messung der Bremskraft ermöglicht ist.
Erfindungsgemäß wird die voranstehende Aufgabe durch ein Plattenbremsprüfstand mit den Merkmalen des Anspruchs 1 sowie durch ein Verfahren zur Bremsenprüfung mit den Merkmalen des Anspruchs 6 gelöst.
Danach ist der Plattenbremsprüfstand gemäß Anspruch 1 derart ausgestaltet und weitergebildet, dass die Geschwindigkeits-Messeinrichtung zur kontaktlosen Messung der Geschwindigkeit ausgebildet ist.
Gemäß Anspruch 6 ist das Verfahren zur Bremsenprüfung in erfindungsgemäßer Weise derart ausgestaltet und weitergebildet, dass die Erfassung der Bremskraft und der Geschwindigkeit synchron erfolgt.

In erfindungsgemäßer Weise ist erkannt worden, dass eine ganz erhebliche Vereinfachung eines Plattenbremsprüfstands der eingangs genannten Art dadurch erreicht werden kann, wenn die Geschwindigkeits-Messeinrichtung zur kontaktlosen Messung der Geschwindigkeit ausgebildet ist. Dabei ist es nicht mehr erforderlich, beispielsweise Kontaktschwellen auf aufwändige Art und Weise zu installieren. Derartige Vorarbeiten oder Installationsarbeiten sind mit dem erfindungsgemäßen Plattenbremsprüfstand nicht mehr erforderlich. In weiter vorteilhafter Weise ist mit einer kontaktlosen Geschwindigkeits-Messung eine sichere und zuverlässige Messung der Geschwindigkeit möglich, da derartige kontaktlose Messungen heutzutage mit hoher Präzision durchgeführt werden können. Im Ergebnis ist daher mit dem erfindungsgemäßen Plattenbremsprüfstand eine besonders einfache und sichere Messung der Bremskraft ermöglicht.

Hinsichtlich des erfindungsgemäßen Verfahrens zur Bremsenprüfung wird die voranstehende Aufgabe auf überraschend einfache Weise dadurch gelöst, dass die Erfassung der Bremskraft und der Geschwindigkeit synchron erfolgt. Durch eine derartige synchrone Erfassung von Bremskraft und Geschwindigkeit ist eine exakte Nachverfolgung des Bremsvorgangs anhand Bremskraftmesswerten und Geschwindigkeitsmesswerten möglich. Der Bremsvorgang kann anhand dieser Messwerte exakt abgebildet werden, so dass eine geeignete Datenauswertung und Datenanzeige mit Bezug auf den gesamten Bremsvorgang ermöglicht sind. Im Ergebnis ist auch hierdurch eine einfache und sichere Messung der Bremskraft realisierbar.

In einer konkreten Ausgestaltung des Plattenbremsprüfstands könnte die Geschwindigkeits-Messeinrichtung einen Radar- und/oder Infrarot- und/oder Ultraschallsensor aufweisen. Dabei ist die Realisierung eines einzelnen Messprinzips oder auch mehrerer der genannten Messprinzipien innerhalb eines Sensors denkbar. Hierbei ist auf den jeweiligen Anwendungsfall abzustellen. In jedem Fall ist durch eine derart konkrete Ausgestaltung der Geschwindigkeits-Messeinrichtung eine sichere Messung der Geschwindigkeit ermöglicht.

In weiter vorteilhafter Weise könnten die erfassten Geschwindigkeitsmesswerte jeweils synchron erfassten Bremskraftmesswerten zugeordnet sein. Mit anderen Worten wird bei der Erfassung der Messwerte der Bremskraft und der Geschwindigkeit sogleich eine Zuordnung der jeweiligen Messwerte zu fest vorgebbaren Zeitpunkten oder auch kontinuierlich realisiert. Somit könnte der Bremskraft-/Geschwindigkeitsverlauf in geeigneter Weise ausgewertet und mittels entsprechender Mittel grafisch dargestellt werden. Eine derartige grafische Darstellung könnte auf einer Messwertanzeige sichtbar gemacht werden.

In konstruktiv besonders einfacher Weise könnten die Geschwindigkeits-Messeinrichtung und die Bremskraft-Messeinrichtung mit einem Messrechner verbunden sein. Somit könnten die erfassten Messwerte simultan dem Messrechner zur geeigneten Auswertung während eines Messvorgangs übermittelt werden. Eine zeitsynchrone Erfassung kann hierdurch realisiert werden.

Der Radar- und/oder Infrarot- und/oder Ultraschallsensor könnte in einfacher und geschützter Art und Weise in eine Messwertanzeige des Plattenbremsprüfstands eingebaut oder integriert sein. Hierdurch ist ein besonders einfach handhabbarer und kompakter Plattenbremsprüfstand realisierbar. Alternativ hierzu könnte der Radar- und/oder Infrarot- und/oder Ultraschallsensor als separates Bauteil realisiert sein. Eine geeignete drahtlose Verbindung oder Kabelverbindung mit dem Messrechner könnte eine sichere Messwerterfassung gewährleisten.

In weiter vorteilhafter Weise könnte der Messrechner in eine Messwertanzeige des Plattenbremsprüfstands eingebaut oder integriert sein. Insoweit könnte eine besonders kompakte Ausgestaltung des gesamten Plattenbremsprüfstands bereitgestellt werden.

Im Hinblick auf ein besonders zuverlässiges Verfahren zur Bremsenprüfung könnte die Erfassung der Bremskraft und der Geschwindigkeit kontinuierlich während vorzugsweise des gesamten Messvorgangs erfolgen. Hierdurch ist die Erfassung umfangreicher Daten während des gesamten Messvorgangs oder während vorgebbarer Zeitintervalle des Messvorgangs ermöglicht. Hinsichtlich des Zeitraums der Messwerterfassung ist auf den jeweiligen Anwendungsfall abzustellen.

Zur weiter besonders sicheren Messung und Bestimmung der Bremskraft könnten die erfassten Geschwindigkeitsmesswerte den jeweils synchron erfassten Bremskraftmesswerten zugeordnet und dann vorzugsweise in einer Speichermatrix gespeichert oder abgelegt werden. Hierdurch könnte die Voraussetzung für vielfältige Auswertungsarten der Daten bereitgestellt sein.

In besonders einfacher und komfortabler Weise könnte der Messvorgang bei einem detektierten Ansteigen der Bremskräfte begonnen werden oder automatisch beginnen. Letztendlich könnte der Messvorgang starten, sobald das zu messende Fahrzeug aufgefahren ist und ein Bremsvorgang begonnen wird.

Hinsichtlich einer weiter besonders komfortablen Ausgestaltung des Verfahrens zur Bremsenprüfung könnte eine Auswertung der erfassten Messwerte der Bremskraft und der Geschwindigkeit in einem vorgebbaren Geschwindigkeitsintervall erfolgen. Hierdurch könnte individuellen Anforderungen an die Auswertung der erfassten Messwerte Rechnung getragen werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung eine Anordnung von Anzeige und Sensoren bei einem Ausführungsbeispiel eines erfindungsgemäßen Plattenbremsprüfstands und
- Fig. 2: in einem Diagramm die Abbildung eines typischen Messvorgangs zur Bremsenprüfung mit Darstellung der Geschwindigkeit und der rechts und links am Fahrzeug auftretenden Bremskräfte.

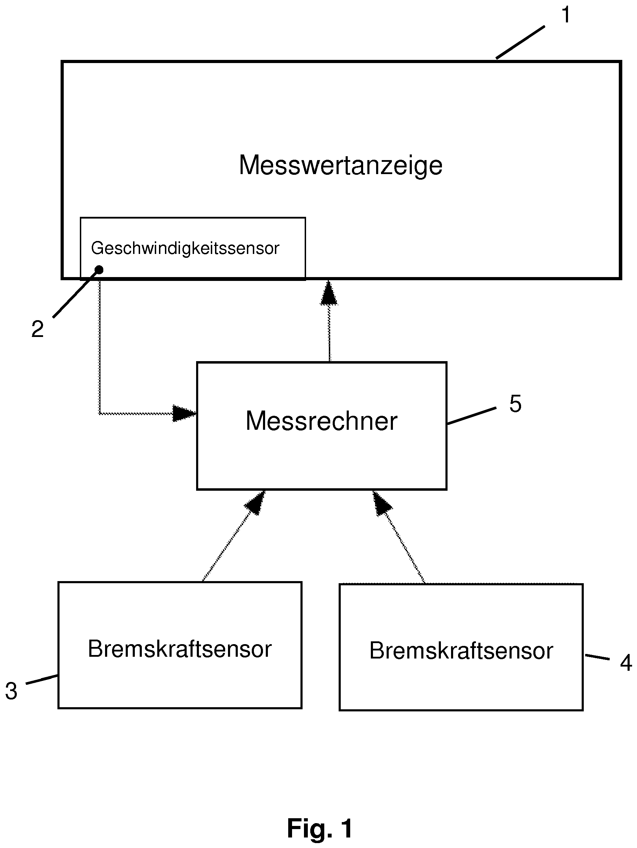

Fig. 1 zeigt in einer schematischen Darstellung die Anordnung von Sensoren und einer Messwertanzeige 1 eines Ausführungsbeispiels eines erfindungsgemäßen Plattenbremsprüfstands. Der Plattenbremsprüfstand weist eine Bremskraft-Messeinrichtung und eine Geschwindigkeits-Messeinrichtung auf, wobei während eines Messvorgangs zur Bremsenprüfung eines Fahrzeugs neben der Bremskraft die Geschwindigkeit des Fahrzeugs für eine vorgebbare Datenauswertung gemessen wird. Im Hinblick auf eine einfache und sichere Messung der Bremskraft ist die Geschwindigkeits-Messeinrichtung zur kontaktlosen Messung der Geschwindigkeit ausgebildet.

Im Konkreten weist die Geschwindigkeits-Messeinrichtung einen Radar- und/oder Infrarot- und/oder Ultraschallsensor oder Geschwindigkeitssensor 2 auf. Zur Messung der Bremskraft weist die Bremskraft-Messeinrichtung zwei Bremskraftsensoren 3 und 4 für die rechte und linke Seite eines Fahrzeugs auf. Sowohl der Geschwindigkeitssensor 2 als auch die Bremskraftsensoren 3 und 4 sind mit einem Messrechner 5 verbunden.

Der Geschwindigkeitssensor 2 ist in die Messwertanzeige 1 integriert.

Der Geschwindigkeitssensor 2 ermittelt kontinuierlich die Fahrzeuggeschwindigkeit. Im Messrechner 5 werden die Bremskraft und die Geschwindigkeit zeitgleich oder zeitsynchron erfasst, abgespeichert und ausgewertet. Die daraus gewonnenen Daten werden dann an die Messwertanzeige 1 ausgegeben. Wenn das Fahrzeug auffährt wird der Messvorgang automatisch begonnen, wobei die Erfassung der Bremskraft und der Geschwindigkeit synchron erfolgen. Die Erfassung der Bremskraft und der Geschwindigkeit erfolgen im Konkreten kontinuierlich während des gesamten Messvorgangs oder während vorgebbarer Zeitintervalle oder Geschwindigkeitsintervalle des Fahrzeugs.

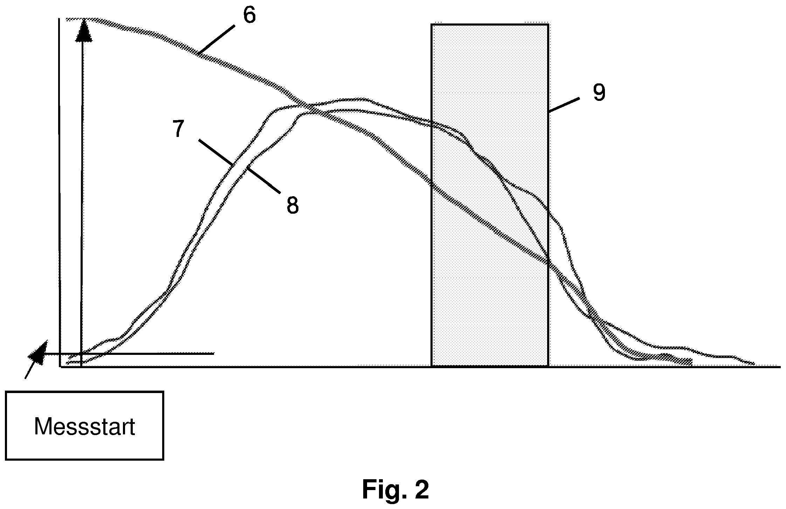

Fig. 2 zeigt in einem Diagramm den Verlauf der Geschwindigkeit mit den zugehörigen Bremskräften auf der rechten und linken Seite des Fahrzeugs. Die Messkurve der Geschwindigkeit ist mit der Bezugsziffer 6 gekennzeichnet. Die Messkurven der Bremskraft sind mit den Bezugsziffern 7 und 8 bezeichnet. Der Bereich 9 stellt ein Geschwindigkeitsfenster dar, wobei dies beispielsweise das Geschwindigkeitsfenster zwischen 5 und 2 km/h bilden kann.

Hinsichtlich weiterer vorteilhafter Ausgestaltungen des erfindungsgemäßen Plattenbremsprüfstands oder des erfindungsgemäßen Verfahrens wird zur Vermeidung von Wiederholungen auf den allgemeinen Teil der Beschreibung sowie auf die beigefügten Ansprüche verwiesen. Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Messwertanzeige
- 2: Geschwindigkeitssensor
- 3: Bremskraftsensor
- 4: Bremskraftsensor
- 5: Messrechner
- 6: Messkurve der Geschwindigkeit
- 7: Messkurve der Bremskraft
- 8: Messkurve der Bremskraft
- 9: Bereich

## Patentansprüche

1. Plattenbremsprüfstand mit einer Bremskraft-Messeinrichtung und einer Geschwindigkeits-Messeinrichtung, wobei der Plattenbremsprüfstand derart ausgebildet ist, dass während eines Messvorgangs zur Bremsenprüfung eines auf Platten des Plattenbremsprüfstands auffahrenden und dann abbremsenden Fahrzeugs neben der Bremskraft die Geschwindigkeit des Fahrzeugs für eine vorgebbare Datenauswertung messbar ist, **dadurch gekennzeichnet, dass** die Geschwindigkeits-Messeinrichtung (2) zur kontaktlosen Messung der Geschwindigkeit ausgebildet ist und dass die Bremskraft-Messeinrichtung (3,4) und die Geschwindigkeits-Messeinrichtung zur synchronen und kontinuierlichen Erfassung der Bremskraft und der Geschwindigkeit während des gesamten Messvorgangs oder während vorgebbarer Zeitintervalle oder während vorgebbarer Geschwindigkeitsintervalle des Fahrzeugs ausgebildet sind.

2. Plattenbremsprüfstand nach Anspruch 1, **dadurch gekennzeichnet, dass** die Geschwindigkeits-Messeinrichtung einen Radar- und/oder Infrarot- und/oder Ultraschallsensor (1) aufweist.

3. Plattenbremsprüfstand nach Anspruch 1 oder 2, **dadurch gekennzeichnet, dass** die erfassten Geschwindigkeitsmesswerte jeweils synchron erfassten Bremskraftmesswerten zugeordnet sind.

4. Plattenbremsprüfstand nach einem der Ansprüche 1 bis 3, **dadurch gekennzeichnet, dass** die Geschwindigkeits-Messeinrichtung und die Bremskraft-Messeinrichtung mit einem Messrechner (5) verbunden sind.

5. Plattenbremsprüfstand nach einem der Ansprüche 1 bis 4, **dadurch gekennzeichnet, dass** der Radar- und/oder Infrarot- und/oder Ultraschallsensor (2) und/oder der Messrechner (5) in eine Messwertanzeige (1) des Plattenbremsprüfstands eingebaut oder integriert sind oder ist.

6. Verfahren zur Bremsenprüfung bei Fahrzeugen mittels eines Plattenbremsprüfstands mit einer Bremskraft-Messeinrichtung und einer Geschwindigkeits-Messeinrichtung, insbesondere mittels eines Plattenbremsprüfstands nach einem der Ansprüche 1 bis 5, wobei während eines Messvorgangs zur Bremsenprüfung eines auf Platten des Plattenbremsprüfstands auffahrenden und dann abbremsenden Fahrzeugs neben der Bremskraft die Geschwindigkeit des Fahrzeugs für eine vorgebbare Datenauswertung gemessen wird,
**dadurch gekennzeichnet, dass** die Erfassung der Bremskraft und der Geschwindigkeit synchron und kontinuierlich während des gesamten Messvorgangs oder während vorgebbarer Zeitintervalle oder während vorgebbarer Geschwindigkeitsintervalle des Fahrzeugs erfolgt.

7. Verfahren nach Anspruch 6, **dadurch gekennzeichnet, dass** die erfassten Geschwindigkeitsmesswerte den jeweils synchron erfassten Bremskraftmesswerten zugeordnet und vorzugsweise in einer Speichermatrix gespeichert oder abgelegt werden.

8. Verfahren nach Anspruch 6 oder 7, **dadurch gekennzeichnet, dass** der Messvorgang bei einem detektierten Ansteigen der Bremskräfte begonnen wird oder automatisch beginnt.

## Claims

1. Plate brake test stand having a brake force measuring device and a speed measuring device, wherein the plate brake test stand is constructed in such a manner that during a measurement operation for brake testing of a vehicle driving onto plates of the plate brake test stand and then braking, in addition to the brake force the speed of the vehicle can be measured for a predeterminable data evaluation, **characterised in that** the speed measuring device (2) is constructed for contactless measurement of the speed and **in that** the brake force measuring device (3, 4) and the speed measuring device are constructed for synchronous and continuous detection of the brake force and the speed during the entire measurement operation or during predeterminable time periods or during predeterminable speed ranges of the vehicle.

2. Plate brake test stand according to claim 1, **characterised in that** the speed measuring device has a radar and/or infrared and/or ultrasound sensor (1).

3. Plate brake test stand according to claim 1 or 2, **characterised in that** the detected speed measurement values are each associated with synchronously detected brake force measurement values.

4. Plate brake test stand according to any one of claims 1 to 3, **characterised in that** the speed measuring device and the brake force measuring device are connected to a measurement computer (5).

5. Plate brake test stand according to any one of claims 1 to 4, **characterised in that** the radar and/or infrared and/or ultrasound sensor (2) and/or measurement computer (5) is/are installed or integrated in a measurement value display (1) of the plate brake test stand.

6. Method for brake testing in vehicles using a plate brake test stand having a brake force measuring device and a speed measuring device, in particular by means of a plate brake test stand according to any one of claims 1 to 5, wherein during a measurement operation for brake testing of a vehicle driving onto plates of the plate brake test stand and then braking, in addition to the brake force the speed of the vehicle is measured for a predeterminable data evaluation, **characterised in that** the detection of the brake force and the speed is carried out synchronously and continuously during the entire measurement operation or during predeterminable time periods or during predeterminable speed ranges of the vehicle.

7. Method according to claim 6, **characterised in that** the detected speed measurement values are associated with the brake force measurement values detected synchronously in each case and are preferably stored or deposited in a storage matrix.

8. Method according to claim 6 or 7, **characterised in that** the measurement operation is begun or begins automatically if an increase of the brake forces is detected.

## Revendications

1. Banc d'essai de freins à plaques avec un dispositif de mesure de force de freinage et un dispositif de mesure de vitesse, le banc d'essai de freins à plaques étant conçu de façon à ce que, pendant un processus de mesure, pour le contrôle des freins d'un véhicule qui se déplace sur des plaques d'un banc d'essai de freins à plaques puis qui freine, la vitesse du véhicule puisse être mesurée en plus de la force de freinage pour une analyse de données déterminée,
**caractérisé en ce que**
le dispositif de mesure de vitesse (2) est conçu pour la mesure sans contact de la vitesse et **en ce que** le dispositif de mesure de force de freinage (3, 4) est conçu pour la mesure synchrone et continue de la force de freinage et de la vitesse pendant l'ensemble du processus de mesure ou pendant des intervalles de temps prédéterminés ou pendant des intervalles de vitesses prédéterminés du véhicule.

2. Banc d'essai de freins à plaques selon la revendication 1, **caractérisé en ce que** le dispositif de mesure de vitesse comprend un capteur radar et/ou infrarouge et/ou à ultrasons (1).

3. Banc d'essai de freins à plaques selon la revendication 1 ou 2, **caractérisé en ce que** les valeurs de mesures de vitesse relevées sont attribuées de manière synchrone à des valeurs de mesure de force de freinage relevées.

4. Banc d'essai de freins à plaques selon l'une des revendications 1 à 3, **caractérisé en ce que** le dispositif de mesure de vitesse et le dispositif de mesure de force de freinage sont reliés à l'aide d'un ordinateur de mesure (5).

5. Banc d'essai de freins à plaques selon l'une des revendications 1 à 4, **caractérisé en ce que** le capteur radar et/ou infrarouge et/ou à ultrasons (2) et/ou l'ordinateur de mesure (5) sont ou est monté(s) ou intégré(s) dans un affichage de valeurs de mesure (1) du banc d'essai de freins à plaques.

6. Procédé de contrôle du freinage de véhicules au moyen d'un banc d'essai de freins à plaques avec un dispositif de mesure de force de freinage et un dispositif de mesure de vitesse, plus particulièrement au moyen d'un banc d'essai de freins à plaques selon l'une des revendications 1 à 5, moyennant quoi, pendant un processus de mesure, pour le contrôle des freins d'un véhicule qui se déplace sur des plaques d'un banc d'essai de freins à plaques puis qui freine, la vitesse du véhicule est mesurée en plus de la force de freinage pour une analyse de données déterminée,
**caractérisé en ce que**
la mesure de la force de freinage et de la vitesse a lieu de manière synchrone et continue pendant l'ensemble du processus de mesure ou pendant des intervalles de temps prédéterminés ou pendant des intervalles de vitesse prédéterminés du véhicule.

7. Procédé selon la revendication 6, **caractérisé en ce que** les valeurs de mesure de vitesse relevées sont attribuées aux valeurs de mesure de la force de freinage relevées de manière synchrone et de préférence enregistrées ou stockées dans une matrice de mémoire.

8. Procédé selon la revendication 6 ou 7, **caractérisé en ce que** le processus de mesure commence lors de la détection de l'augmentation des forces de freinage ou commence automatiquement.
